# EUROPÄISCHE PATENTSCHRIFT

(11) **EP 2 986 969 B1**
(45) Veröffentlichungstag und Bekanntmachung des Hinweises auf die Patenterteilung: **10.04.2019**
(21) Anmeldenummer: 14706830.8
(22) Anmeldetag: 26.02.2014
(51) Int. Cl.: G01N 21/27, G01N 21/47

(54) **PRÜFVORRICHTUNG FÜR EIN STREULICHTMESSGERÄT, HERSTELLUNGSVERFAHREN FÜR EINE PRÜFVORRICHTUNG FÜR EIN STREULICHTMESSGERÄT UND VERFAHREN ZUM ÜBERPRÜFEN EINES STREULICHTMESSGERÄTS**
TESTING DEVICE FOR A SCATTERED-LIGHT MEASURING DEVICE, PRODUCTION METHOD FOR A TESTING DEVICE FOR A SCATTERED-LIGHT MEASURING DEVICE, AND METHOD FOR CHECKING A SCATTERED-LIGHT MEASURING DEVICE
DISPOSITIF DE TEST D'UN APPAREIL DE MESURE DE LUMIÈRE DISPERSÉE, PROCÉDÉ DE FABRICATION D'UN DISPOSITIF DE TEST D'UN APPAREIL DE MESURE DE LUMIÈRE DISPERSÉE ET PROCÉDÉ DE VÉRIFICATION D'UN APPAREIL DE MESURE DE LUMIÈRE DISPERSÉE

(30) Priorität: 19.04.2013 DE 102013207166
(43) Veröffentlichungstag der Anmeldung: 24.02.2016
(73) Patentinhaber: Robert Bosch GmbH, 70442 Stuttgart (DE)
(72) Erfinder: STENGEL, Karl, 73779 Deizisau (DE); HAAGA, Gerhard, 73275 Ohmden (DE); NEUENDORF, Michael, 73207 Plochingen (DE); HOSS, Reinhard, 73207 Plochingen (DE); STRACK, Daniel, 73066 Uhingen (DE)
(86) Internationale Anmeldenummer: PCT/EP2014/053740
(87) Internationale Veröffentlichungsnummer: WO 2014/170054

(56) Entgegenhaltungen:
- WO-A1-2012/144522
- DE-A1-102010 002 423
- DE-A1-102011 002 421
- JP-A- 2007 322 206
- JP-A- 2009 300 182
- US-A1- 2007 190 291

## Beschreibung

Die Erfindung betrifft eine Prüfvorrichtung für ein Streulichtmessgerät. Ebenso betrifft die Erfindung ein Herstellungsverfahren für eine Prüfvorrichtung für ein Streulichtmessgerät.

Des Weiteren betrifft die Erfindung ein Verfahren zum Überprüfen eines Streulichtmessgeräts.

### Stand der Technik

In der DE 10 2010 002 423 A1 ist ein Streulichtmessgerät zur Messung einer Partikelkonzentration in Kraftfahrzeugabgasen beschrieben. Das Streulichtmessgerät hat eine Lichtquelle, welche Licht in eine Streulichtmesskammer ausstrahlt. Ein von Partikeln in einem in die Streulichtmesskammer geleiteten Abgasstrom bewirktes Streulicht kann anschließend mittels zumindest eines Lichtsensors des Streulichtmessgeräts detektiert werden. Anhand der von den Lichtsensoren detektierten Messwerte kann auf eine Konzentration der in dem Abgasstrom enthaltenen Partikel rückgeschlossen werden.

Die DE 10 2010 002 423 A1 beschreibt auch einen in der Streulichtmesskammer anordbaren Streukörper zum Kalibrieren des Streulichtmessgeräts. Der Streukörper weist über sein gesamtes Volumen verteilte Streuzentren auf, an welchen das in die Streulichtmesskammer eingestrahlte Licht streubar ist. Durch ein Einsetzen des Streukörpers in die abgasfreie Streulichtmesskammer soll eine Kalibrierung des Streulichtmessgeräts ausführbar sein.

Außerdem beschreibt Die US 2007/0190291 A1 einen Lichtstreuungskörper zur Verwendung in einem Transmissionsbildschirm. Der Lichtstreuungskörper hat eine Lichtstreuschicht aus einem transparenten Harz mit darin eingebetteten sphärischen Mikropartikeln, deren Brechungsindex von dem des transparenten Harzes abweicht. Außerdem kann eine transparente Polymerfolie auf zwei voneinander weg gerichteten Oberflächen der Lichtstreuschicht liegen.

Weitere Lichtstreukörper sind in der JP 2009 300182 A, der DE 10 2011 002421 A1, der JP 2007 322206 A und der WO 2012/144522 A1 beschrieben.

### Offenbarung der Erfindung

Die Erfindung schafft eine Prüfvorrichtung für ein Streulichtmessgerät mit den Merkmalen des Anspruchs 1, ein Herstellungsverfahren für eine Prüfvorrichtung für ein Streulichtmessgerät mit den Merkmalen des Anspruchs 10 und ein Verfahren zum Überprüfen eines Streulichtmessgeräts mit den Merkmalen des Anspruchs 11.

### Vorteile der Erfindung

Die von der vorliegenden Erfindung geschaffene Prüfvorrichtung eignet sich gut für eine Überprüfung, Eichung und/oder Kalibrierung eines Streulichtmessgeräts. Aufgrund der vorteilhaften Ausbildung des lichtdurchlässigen Körpers mit einem Streukörperabschnitt mit Streuzentren, einem Streuzentren-freien vorgelagerten Bereich und einem Streuzentren-freien nachgelagerten Bereich kann eine Beeinflussung der Überprüfung, Eichung und/oder Kalibrierung durch eine herkömmlicherweise auftretende störende diffuse Streustrahlung unterdrückt werden. Die störende diffuse Streustrahlung kann herkömmlicherweise beispielsweise auftreten, wenn eine Lichteintritts- und/oder Lichtaustrittsseite des Streukörpers in einem Blickfeld mindestens eines Lichtsensors des Streulichtmessgeräts liegen. Durch die erfindungsgemäße Ausbildung des Streuzentren-freien vorgelagerten Bereichs und des Streuzentren-freien nachgelagerten Bereichs kann jedoch sichergestellt werden, dass sowohl eine Lichteintrittsseite als auch eine Lichtaustrittsseite des lichtdurchlässigen Körpers außerhalb eines Detektionsfelds des mindestens einen Lichtsensors des Streulichtmessgeräts liegen. Dies ist durch eine entsprechende Festlegung der Ausdehnung des vorgelagerten Bereichs und des nachgelagerten Bereichs (entlang einer Verlaufsrichtung eines von einer Lichtquelle des Streulichtmessgeräts ausgesendeten Lichts) auf einfache Weise gewährleistbar. Zusätzlich kann durch die vorteilhafte Ausbildung des vorgelagerten Bereichs und des nachgelagerten Bereichs ohne Streuzentren sichergestellt werden, dass nahezu keine Lichtstreuung innerhalb des vorgelagerten Bereichs oder des nachgelagerten Bereichs auftritt, welche die Überprüfung, Eichung und/oder Kalibrierung als zusätzlich störende diffuse Streustrahlung beeinträchtigt.

Es wird darauf hingewiesen, dass aufgrund der erfindungsgemäßen vorteilhaften Unterdrückung einer störenden diffusen Streustrahlung mittels der vorliegenden Erfindung ein Herausfiltern der störenden diffusen Streustrahlung nicht notwendig ist. Somit kann auch auf einen Einsatz einer Blende verzichtet werden. Deshalb muss bei einem Verwenden der erfindungsgemäßen Prüfvorrichtung zum Überprüfen des Streulichtmessgeräts auch nicht befürchtet werden, dass ein unsachgemäßes Einsetzen der Blende zu einer Verfälschung der Überprüfung, Eichung und/oder Kalibrierung führt. Beispielsweise entfällt die Notwendigkeit, während der Überprüfung, Eichung und/oder Kalibrierung darauf zu achten, dass die Blende in ihrer Soll-Position vorliegt, verschmutzungsfrei ist oder unerwünschte Abschattungseffekte bewirkt. Auch entfallen die Kosten einer Blende, welche vergleichsweise groß sein können, da eine zu einer Überprüfung, Eichung und/oder Kalibrierung einsetzbare Blende gewisse Eigenschaften (wie z.B. eine geringe Dicke) erfüllen sollte. Die vorliegende Erfindung gewährleistet somit eine Überprüfung, Eichung und/oder Kalibrierung eines Streulichtmessgeräts, welche leichter und schneller ausführbar ist, keine teuren Bauteile benötigt und zu einem verlässlicheren Ergebnis führt.

Vorzugsweise sind der vorgelagerte Bereich und/oder der nachgelagerte Bereich aus Klarglas gebildet. Somit kann ein kostengünstiges Material zum Bilden des vorgelagerten Bereichs und/oder des nachgelagerten Bereichs eingesetzt werden.

In einer vorteilhaften Weiterbildung umfasst der lichtdurchlässige Körper einen ersten Grauglasfilter und/oder eine erste dämpfende Beschichtung an zumindest einer Teilfläche zumindest einer Außenseite des Streukörperabschnitts. Mittels des ersten Grauglasfilters kann eine Lichtintensität einer in Richtung auf dem mindestens einen Lichtsensor des Streulichtmessgeräts abgestrahlten Streustrahlung abgeschwächt werden. Auf diese Weise kann verlässlich verhindert werden, dass eine zu hohe Lichtintensität der Streustrahlung zu einer Beschädigung/Übersteuerung des mindestens einen Lichtsensors führt.

Als Alternative oder als Ergänzung dazu kann der lichtdurchlässige Körper auch einen zweiten Grauglasfilter und/oder eine zweite dämpfende Beschichtung an einer von dem Streukörperabschnitt weg gerichteten Seite des vorgelagerten Bereichs umfassen. Somit kann eine Intensität des von der Lichtquelle auf den lichtdurchlässigen Körper ausgestrahlten Lichts bereits vorab abgeschwächt werden. Auch auf diese Weise kann eine Beschädigung/ Übersteuerung des mindestens einen Lichtsensors des Streulichtmessgeräts aufgrund einer zu hohen Lichtintensität des darauf auftreffenden Streulichts verlässlich verhindert werden.

Der lichtdurchlässige Körper ist an einer Halterung angeordnet, mittels welcher die Prüfvorrichtung in der Messkammer des Streulichtmessgeräts positionierbar ist. Somit kann verlässlich sichergestellt werden, dass der Streukörperabschnitt innerhalb eines Detektionsbereichs/Sichtfensters des mindestens einen Lichtsensors des Streulichtmessgeräts liegt. Gleichzeitig ist verlässlich sicherstellbar, dass eine Lichteintrittsseite und eine Lichtaustrittsseite des lichtdurchlässigen Körpers während der Messung zur Überprüfung, Eichung und/oder Kalibrierung des Streulichtmessgeräts außerhalb des Sichtfensters/Detektionsbereichs des mindestens einen Lichtsensors liegen. Falsche Messergebnisse bei einem Ausführen der Messung aufgrund einer unvorteilhaften Positionierung der Prüfvorrichtung innerhalb der Messkammer können somit verlässlich ausgeschlossen werden.

In einer weiteren vorteilhaften Ausführungsform sind eine Lichteintrittsseite und/oder eine Lichtaustrittsseite des lichtdurchlässigen Körpers antireflektionsbeschichtet, geschliffen und/oder poliert. Ebenso kann mindestens eine seitliche Abstrahlfläche des lichtdurchlässigen Körpers antireflektionsbeschichtet, geschliffen und/oder poliert sein. Somit ist verlässlich verhinderbar, dass unerwünschte Reflektionen zu einer Verfälschung der Überprüfung, Eichung und/oder Kalibrierung führen.

Beispielsweise kann der lichtdurchlässige Körper quaderförmig sein. Bevorzugter Weise ist der lichtdurchlässige Körper zylinderförmig. Eine derartige zylinderförmige Form des lichtdurchlässigen Körpers, wobei eine Symmetrieachse des lichtdurchlässigen Körpers parallel einer Achse des von der Lichtquelle des Streulichtmessgeräts ausgestrahlten Lichts verläuft, gewährleistet, dass das an den Streuzentren gestreute Licht gleichmäßig verteilt auf eine zu dem mindestens einen Lichtsensor ausgerichtete seitliche Abstrahlfläche des lichtdurchlässigen Körpers trifft. Dies gewährleistet eine relativ geringe (vernachlässigbare) Reflektion des gestreuten Lichts.

Gemäß der Erfindung bilden der lichtdurchlässige vorgelagerte Bereich des lichtdurchlässigen Körpers und der lichtdurchlässige nachgelagerte Bereich des lichtdurchlässigen Körpers eine Umhüllung, welche den Streukörperabschnitt mit den Streuzentren zumindest in zwei von den drei Raumrichtungen komplett umhüllt, wobei die Umhüllung frei von den Streuzentren ist. Die Prüfvorrichtung ist somit auch mittels eines Umgießens des Streukörperabschnitts mit Klarglas einfach herstellbar.

Die oben ausgeführten Vorteile sind auch mittels des entsprechenden Verfahrens zum Überprüfen eines Streulichtmessgeräts bewirkbar. Das Verfahren zum Überprüfen eines Streulichtmessgeräts ist gemäß den oben beschriebenen Ausführungsformen weiterentwickelbar. Beispielsweise kann das Verfahren auch zum Eichen und/oder Kalibrieren des Streulichtmessgeräts eingesetzt werden.

Des Weiteren können die beschriebenen Vorteile realisiert werden durch ein Ausführen eines entsprechenden Herstellungsverfahrens zum Herstellen einer Prüfvorrichtung für ein Streulichtmessgerät. Auch das Herstellungsverfahren ist entsprechend der oben beschriebenen Ausführungsformen der Prüfvorrichtung weiterbildbar.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung eines Beispiels der Prüfvorrichtung;
- Fig. 2a und 2b: schematische Darstellungen eines Beispiels der Prüfvorrichtung;
- Fig. 3a und 3b: schematische Darstellungen eines Beispiels der Prüfvorrichtung;
- Fig. 4: eine Draufsicht auf ein Beispiel der Prüfvorrichtung;
- Fig. 5a und 5b: schematische Darstellungen einer Ausführungsform der Prüfvorrichtung;
- Fig. 6: ein Flussdiagramm zum Erläutern einer Ausführungsform des Verfahrens zum Überprüfen eines Streulichtmessgeräts; und
- Fig. 7: ein Flussdiagramm zum Darstellen einer Ausführungsform des Herstellungsverfahrens zum Herstellen einer Prüfvorrichtung für ein Streulichtmessgerät.

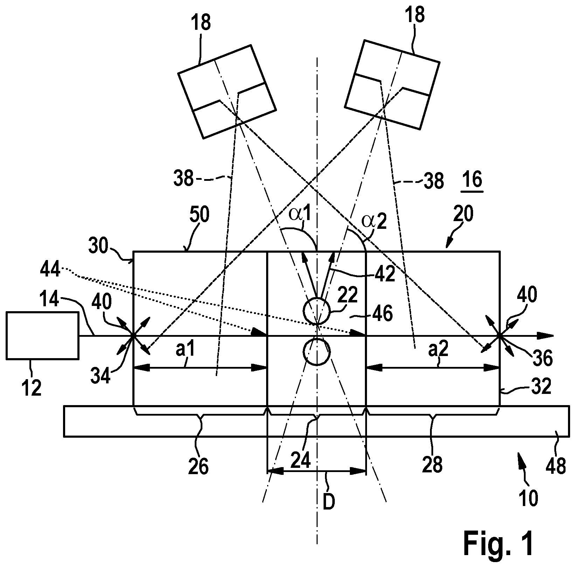

Fig. 1 zeigt eine schematische Darstellung eines Beispiels der Prüfvorrichtung.

Die in Fig. 1 schematisch dargestellte Prüfvorrichtung 10 ist für eine Überprüfung, Eichung und/oder Kalibrierung eines Streulichtmessgeräts einsetzbar. Die Prüfvorrichtung 10 kann deshalb auch als eine Kalibriervorrichtung und/oder eine Eichvorrichtung umschrieben werden.

Ein mittels der Prüfvorrichtung 10 untersuchbares und/oder kalibrierbares Streulichtmessgerät weist beispielsweise eine Lichtquelle 12 auf, mittels welcher Licht 14 in eine schematisch dargestellte Messkammer 16 ausstrahlbar ist. Das von der Lichtquelle 12 ausgestrahlte Licht 14 kann monochromatisch oder polychromatisch sein. Als Lichtquelle 12 kann beispielsweise ein Laser eingesetzt werden. Ein in der Messkammer 16 gestreutes Licht ist mittels mindestens eines Lichtsensors 18 des Streulichtmessgeräts detektierbar. Mittels des mindestens einen Lichtsensors 18 können insbesondere eine Intensität und/oder eine Spektralverteilung des gestreuten und auf mindestens eine Detektionsfläche des Lichtsensors 18 auftreffenden Lichts ermittelbar/messbar sein. Das Streulichtmessgerät kann auch mehrere Lichtsensoren 18 haben. Die Lichtsensoren 18 können unter verschiedenen Winkeln a1 und a2 in Bezug zu einer Achse des von der Lichtquelle 12 ausgestrahlten Lichts 14 angeordnet sein. Die Darstellung von zwei Lichtsensoren 18 in Fig. 1 ist lediglich beispielhaft zu interpretieren. Außerdem wird darauf hingewiesen, dass die unten beschriebene Prüfvorrichtung 10 nicht auf eine Ausstattung eines Streulichtmessgeräts mit einer bestimmten Lichtquelle 12 oder einem speziellen Typ des mindestens einen Lichtsensors 18 limitiert ist.

Das Streulichtmessgerät kann insbesondere ein Gerät zur Messung einer Partikeldichte in Fahrzeugabgasen sein. Beispielsweise kann ein Fahrzeugabgas mittels eines Abgasdrucks und/oder einer Pumpe von einem Fahrzeugverbrennungsmotor in die Messkammer 16 eingeleitet werden. Anhand der gemessenen Intensität/Spektralverteilung des auf den mindestens einen Lichtsensor 18 treffenden Streulichts können Informationen bezüglich einer Partikeldichte, mindestens einer Partikelgröße und/oder mindestens einer Partikelart der in dem Fahrzeugabgas enthaltenen Partikel gewonnen werden. Es wird jedoch darauf hingewiesen, dass die Einsetzbarkeit der Prüfvorrichtung 10 nicht auf ein Streulichtmessgerät zum Untersuchen eines Fahrzeugabgases beschränkt ist. Insbesondere kann die Prüfvorrichtung 10 so ausgebildet sein, dass sie in einer Vielzahl verschiedener Typen von Streulichtmessgeräten einsetzbar ist.

Die zum Überprüfen, Eichen und/oder Kalibrieren des Streulichtmessgeräts nutzbare Prüfvorrichtung 10 weist einen lichtdurchlässigen Körper 20 auf, welcher in der Messkammer 16 des Streulichtmessgeräts anordbar ist. Der lichtdurchlässige Körper 20 umfasst mehrere Streuzentren 22, mittels welchen das von der Lichtquelle 12 ausgestrahlte Licht 14 streubar ist. Die Streuzentren 22 liegen in einem Streukörperabschnitt 24 des lichtdurchlässigen Körpers 20 vor, wobei der Streukörperabschnitt 24 zwischen einem vorgelagerten Bereich 26 des lichtdurchlässigen Körpers 20 und einem nachgelagerten Bereich 28 des lichtdurchlässigen Körpers 20 angeordnet ist. Der vorgelagerte Bereich 26 und der nachgelagerte Bereich 28 sind jeweils frei von den Streuzentren 22. Darunter kann verstanden werden, dass die Streuzentren 22, welche innerhalb des Streukörperabschnitts 24 vorliegen/ausgebildet sind, weder in dem vorgelagerten Bereich 26 noch in dem nachgelagerten Bereich 28 vorliegen/ausgebildet sind. Die Streuzentren 22 des Streukörperabschnitts 24 sind somit auf den Streukörperabschnitt 24 begrenzt.

Aufgrund der vorteilhaften Ausbildung des Streuzentren-freien vorgelagerten Bereichs 26 und des Streuzentren-freien nachgelagerten Bereichs 28 am lichtdurchlässigen Körper 20 können ein vergleichsweise großer erster Abstand a1 zwischen einer Lichteintrittsseite 30 des lichtdurchlässigen Körpers 20 und dem Streukörperabschnitt 24 und ein vergleichsweise großer zweiter Abstand a2 zwischen einer Lichtaustrittsseite 32 des lichtdurchlässigen Körpers 20 und dem Streukörperabschnitt 24 ausgebildet werden. Auf diese Weise ist verlässlich gewährleistbar, dass ein Lichteintrittspunkt 34 des von der Lichtquelle 12 ausgestrahlten Lichts 14 am lichtdurchlässigen Körper 20 und ein Lichtaustrittspunkt 36 des durch den lichtdurchlässigen Körper 20 transmittierenden Lichts 14 außerhalb mindestens eines Detektionsbereichs 38 des mindestens einen Lichtsensors 18 liegt. Somit kann eine an den Punkten 34 und 36 auftretende diffuse Streustrahlung 40 die Überprüfung, Eichung und/oder Kalibrierung nicht beeinträchtigen. (Die unerwünschte diffuse Streustrahlung 40 kann auch als ein Speckle-Muster umschrieben werden.) Außerdem ist durch das Fehlen von Streuzentren in den Bereichen 26 und 28 verlässlich gewährleistbar, dass keine/kaum eine diffuse Streustrahlung während der Transmission des Lichts 14 durch die Bereiche 26 und 28 bewirkt wird. Damit ist sichergestellt, dass lediglich die (erwünschte) Streustrahlung 42 an den Streuzentren 22 von dem mindestens einen Lichtsensor 18 während einer Messung zur Überprüfung, Eichung und/oder Kalibrierung des Streulichtmessgeräts detektiert/ausgewertet wird. Die Prüfvorrichtung 10 ermöglicht somit eine automatische Unterdrückung einer Detektion der störenden diffusen Streustrahlung 40. Somit entfällt eine Notwendigkeit eines Herausfilterns der diffusen Streustrahlung 40, beispielsweise mittels einer Blende. Die Kosten einer Blende und die Nachteile bei einer unsachgemäßen Verwendung der Blende entfallen somit bei einer Verwendung der Prüfvorrichtung 10.

Die an den Streuzentren 22 auftretende Streustrahlung 42 kann mit unterschiedlichen Winkeln α1 und α2 auf verschiedene Lichtsensoren 18 auftreffen. Die Ausrichtung der Lichtsensoren 18 zu dem von der Lichtquelle 12 ausgestrahlten Licht 14 ist zusätzlich mittels der Prüfvorrichtung 10 freier wählbar. Auf die Lichtsensoren 18 wirkt in diesem Fall unabhängig vom jeweiligen Winkel α1 und α2 immer der gleiche das Streulicht 42 produzierende Bereich der Prüfvorrichtung 10, welcher in der Regel durch eine Dicke D des Streukörperabschnitts 24 parallel zur Achse des Lichts 14 definiert ist. Dies bietet große Vorteile bezüglich der Vermessung des Streulichts 42 unter variierenden Winkeln α1 und α2.

Verschiedene Prüfvorrichtungen 10 können mit unterschiedlichen Dicken D des Streukörperabschnitts 24 (parallel zur Achse des Lichts 14) ausgebildet werden. Auf diese Weise kann eine Intensität der auf den mindestens einen Lichtsensor 18 auftreffenden Streustrahlung 42 variiert werden. Die jeweils realisierbaren Intensitätswerte können Abgastrübungswerten, wie z.B. 2 %, 20 %, 50 % und 70 % Trübung, entsprechen. Die Überprüfung, Eichung und/oder Kalibrierung kann somit über einen weiten Wertebereich von Abgastrübungswerten ausgeführt werden. In allen Fällen kann die Dicke D so gewählt werden, dass sich der Streukörperabschnitt 24 vollständig in dem mindestens einen Detektionsbereich 38 des mindestens einen Lichtsensors 18 befindet, während die Punkte 34 und 36 aufgrund der Abstände a1 und a2 außerhalb des mindestens einen Detektionsbereichs 38 liegen.

Unter dem vorgelagerten Bereich 26 kann ein Bereich des lichtdurchlässigen Körpers 20 zwischen der Lichteintrittsseite 30 und dem Streukörperabschnitt 24 verstanden werden. Entsprechend kann der nachgelagerte Bereich 28 ein Bereich des lichtdurchlässigen Körpers 20 zwischen der Lichtaustrittsseite 32 und dem Streukörperabschnitt 24 sein. Der vorgelagerte Bereich 26 und/oder der nachgelagerte Bereich 28 können beispielsweise aus Klarglas gebildet sein. Es wird jedoch darauf hingewiesen, dass die Ausbildbarkeit der Bereiche 26 und 28 nicht auf die Verwendung dieses kostengünstigen Materials limitiert ist. Beispielsweise können die Bereiche 26 und 28 getrennt von dem Streukörperabschnitt 24 geformt und anschließend an Kontaktflächen 44 mit dem Streukörperabschnitt 24/Streukörper verklebt oder verkittet werden. Dies ist auf einfache Weise so ausführbar, dass an den Kontaktflächen 44/Fügestellen keine Brechungs- oder Streueffekte auftreten. Somit ist verlässlich verhinderbar, dass das Licht 14 an einer ersten Übergangsfläche zwischen dem vorgelagerten Bereich 26 und dem Streukörperabschnitt 24 oder einer zweiten Übergangsfläche zwischen dem Streukörperabschnitt 24 und dem nachgelagerten Bereich 28 eine störende Streustrahlung erzeugt, welche mittels des mindestens einen Lichtsensors 18 unerwünschter Weise erfassbar ist. Somit treten keine Lichtstreueffekte an den Kontaktflächen 44/Grenzflächen der Bereiche 26 und 28 und des Streukörperabschnitts 24 auf.

Der Streukörperabschnitt 24 kann aus einem Trägermaterial 46 geformt sein, innerhalb welchem die Streuzentren 22 eingebettet/ausgebildet sind. Für das Trägermaterial 46 ist eine Vielzahl verschiedener Materialien einsetzbar. Mindestens eine Größe (beispielsweise mittlerer Durchmesser), eine Größenverteilung, eine Konzentration und/oder ein mittlerer Abstand der in dem Streukörperabschnitt 24 angeordneten/ausgebildeten Streuzentren 22 sind relativ frei wählbar.

Der lichtdurchlässige Körper 20 ist an einer Halterung 48 angeordnet, mittels welcher die Prüfvorrichtung 10 in der Messkammer 16 positionierbar ist. Damit ist die Prüfvorrichtung 10 auf einfache Weise und verlässlich in einer bevorzugten Position in der Messkammer 16 fixierbar. Beispielsweise kann dazu eine Aufnahmevorrichtung der Messkammer 16 genutzt werden.

Bevorzugter Weise sind die Lichteintrittsseite 30 und/oder die Lichtaustrittsseite 32 des lichtdurchlässigen Körpers 20 antireflektionsbeschichtet, geschliffen und/oder poliert. Auch mindestens eine seitliche Abstrahlfläche 50 des lichtdurchlässigen Körpers 20 kann antireflektionsbeschichtet, geschliffen und/oder poliert sein. Insbesondere eine zu dem mindestens einen Lichtsensor 18 ausgerichtet/von der Halterung 48 weg gerichtete Abstrahlfläche 50, durch welche das von den Streuzentren 22 bewirkte Streulicht 42 aus dem lichtdurchlässigen Körper 20 austritt, kann antireflektionsbeschichtet, geschliffen und/oder poliert sein. Somit ist eine Beeinträchtigung der Überprüfung, Eichung und/oder Kalibrierung durch unerwünschte Reflektions-Effekte verlässlich verhinderbar.

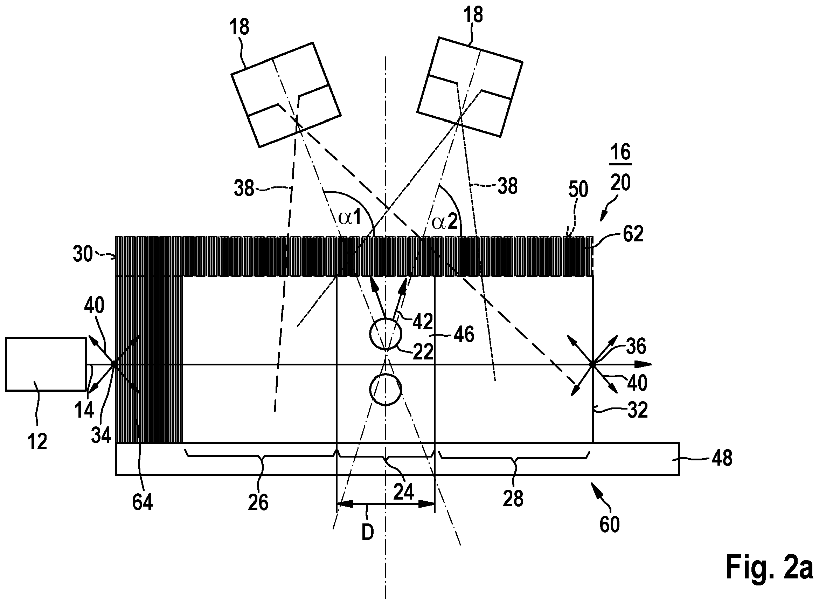

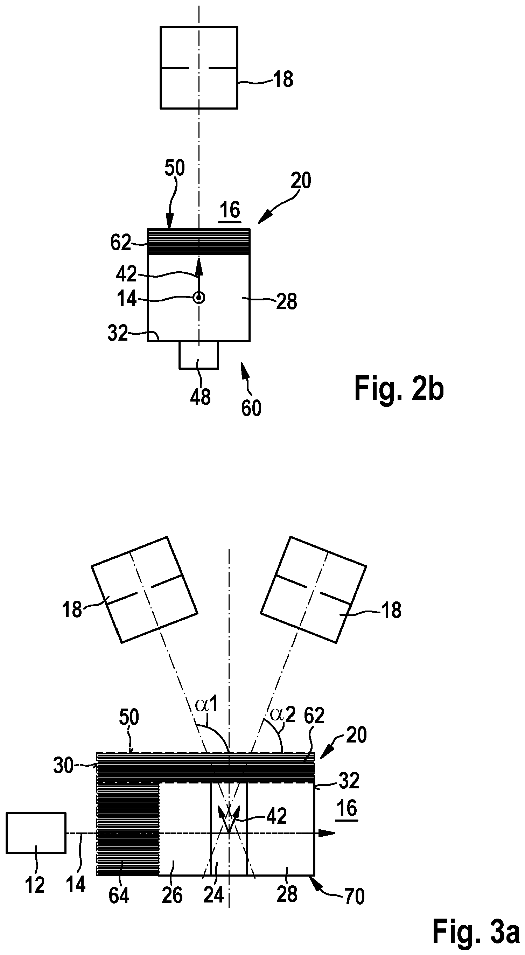

Fig. 2a und 2b zeigen schematische Darstellungen eines Beispiels der Prüfvorrichtung. (Während die Bildebene der Fig. 2a entlang einer Längsachse der Prüfvorrichtung verläuft, ist die Bildebene der Fig. 2b senkrecht zu der Längsachse der Prüfvorrichtung ausgerichtet.)

Die in Fig. 2a und 2b in verschiedenen Seitenansichten dargestellte Prüfvorrichtung 60 weist einen quaderförmigen lichtdurchlässigen Körper 20 auf. (Das Anbringen des quaderförmigen lichtdurchlässigen Körpers 20 an einer Halterung 48 ist optional.) Als Weiterbildung umfasst der lichtdurchlässige Körper 20 der Prüfvorrichtung 60 zusätzlich einen ersten Grauglasfilter 62 und einen zweiten Grauglasfilter 64. Der erste Grauglasfilter 62 deckt zumindest eine Teilfläche zumindest einer Außenseite des Streukörperabschnitts 24 ab. Bevorzugter Weise bildet eine Außenfläche des ersten Grauglasfilters 62 die zu dem mindestens einen Lichtsensor 18 ausgerichtete/von der Halterung 48 weg gerichtete seitliche Abstrahlfläche 50. Somit ist mittels des ersten Grauglasfilters 62 eine Dämpfung der Streustrahlung 42 möglich.

Der zweite Grauglasfilter 64 kann an einer von dem Streukörperabschnitt 24 weg gerichteten Seite des vorgelagerten Bereichs 26 angeordnet sein. Insbesondere kann die Lichteintrittsseite 30 eine Außenseite des zweiten Grauglasfilters 64 sein. Somit kann der zweite Grauglasfilter 64 vorteilhaft zur Dämpfung einer Intensität des von der Lichtquelle 12 ausgestrahlten Lichts 14 eingesetzt werden.

Statt einer Ausstattung der Prüfvorrichtung 60 mit den Grauglasfiltern 62 und 64 kann auch mindestens ein externer Grauglasfilter zwischen der Lichtquelle 12 und dem lichtdurchlässigen Körper 20 und/oder zwischen dem lichtdurchlässigen Körper 20 und dem mindestens einen Lichtsensor 18 eingesetzt werden. Anstelle der Grauglasfilter 62 und 64 können außerdem auch dämpfende Beschichtungen des lichtdurchlässigen Körpers 20 zur Dämpfung eingesetzt werden.

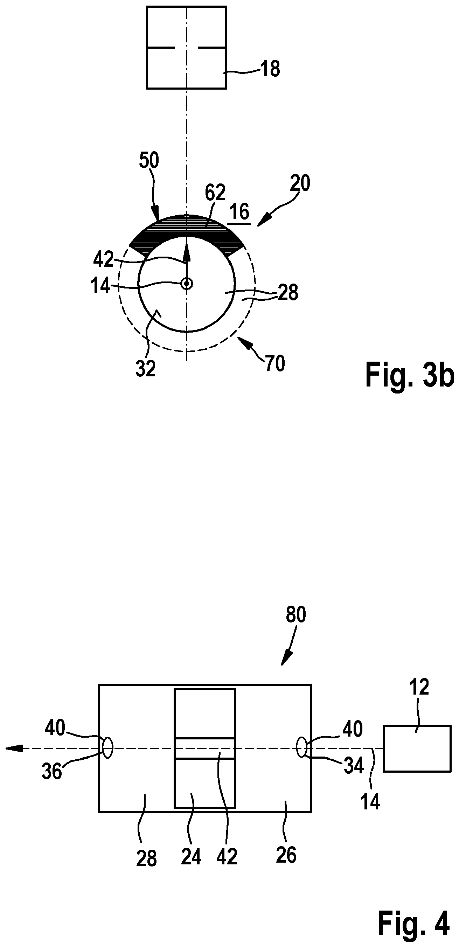

Fig. 3a und 3b zeigen schematische Darstellungen eines Beispiels der Prüfvorrichtung. (Die Bildebene der Fig. 3a verläuft entlang einer Längsachse der Prüfvorrichtung, während die Bildebene der Fig. 3b senkrecht zu der Längsachse der Prüfvorrichtung ausgerichtet ist.)

Bei der in Fig. 3a und 3b in verschiedenen Seitenansichten dargestellten Prüfvorrichtung 70 ist der lichtdurchlässige Körper 20 zylinderförmig. Somit ist gewährleistet, dass die in dem Streukörperabschnitt 24 erzeugte Streustrahlung 42 gleich verteilt auf die Mantelfläche/seitliche Abstrahlfläche 50 trifft, was eine Reduzierung der Reflektion der Streustrahlung 42 bewirkt. Zusätzlich kann die seitliche Abstrahlfläche 50/die Mantelfläche des lichtdurchlässigen Körpers 20 antireflektionsbeschichtet, geschliffen und/oder poliert sein. Reflektionen können somit kaum eine mittels der Prüfvorrichtung 70 ausgeführte Überprüfung, Eichung und/oder Kalibrierung beeinträchtigen.

Fig. 4 zeigt eine Draufsicht auf eines Beispiels der Prüfvorrichtung. Die in Fig. 4 wiedergegebene Draufsicht auf die Prüfvorrichtung 80 gibt ein mittels eines bildgebenden Lichtsensors 18 ermittelbares Bild wieder. Dabei ist zu erkennen, dass die wahrnehmbaren Lichtpunkte hauptsächlich auf das Streulicht 42 innerhalb des Streukörperabschnitts 24 zurückzuführen sind. Das Streulicht 42 entsteht durch eingestrahltes Licht 14, das auf die Streuzentren im Streukörperabschnitt 24 trifft. Im Gegensatz dazu sind die Speckle-Muster an den Punkten 34 und 36 kaum wahrnehmbar. Die Prüfvorrichtung 80 realisiert somit alle oben beschriebenen Vorteile.

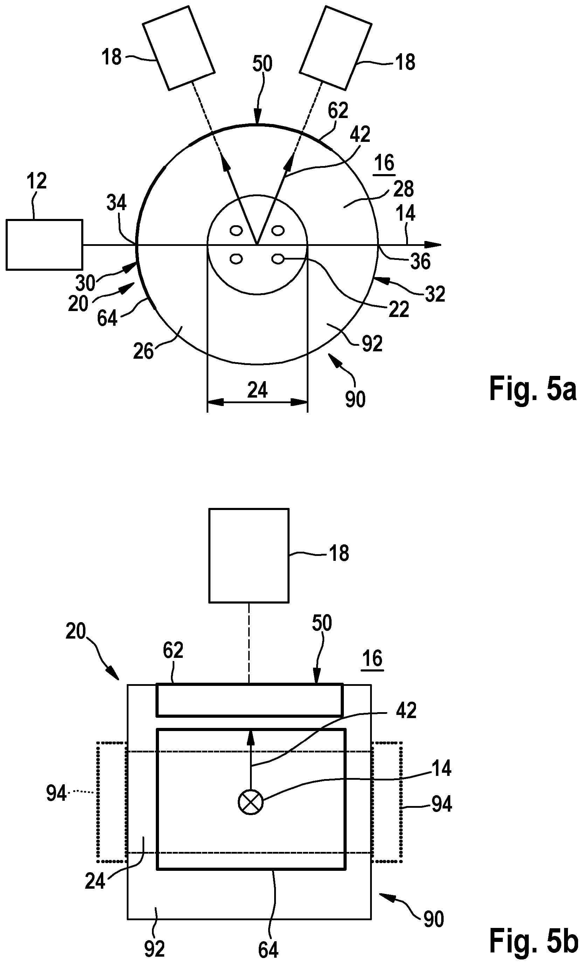

Fig. 5a und 5b zeigen schematische Darstellungen einer Ausführungsform der Prüfvorrichtung. (Die Bildebene der Fig. 5a verläuft entlang einer Längsachse der Prüfvorrichtung, während die Bildebene der Fig. 5b senkrecht zu der Längsachse der Prüfvorrichtung ausgerichtet ist.)

Wie anhand der in Fig. 5a und 5b schematisch dargestellten Prüfvorrichtung 90 erkennbar ist, können der vorgelagerte Bereich 26 des lichtdurchlässigen Körpers 20 und der nachgelagerte Bereich 28 des lichtdurchlässigen Körpers 20 auch Untereinheiten einer Umhüllung 92 sein, welche den Streukörperabschnitt 24 mit den Streuzentren 22 zumindest in zwei Raumrichtungen komplett umhüllt, wobei die Umhüllung 92 frei von den Streuzentren 22 ist. Der Lichteintrittspunkt 34 und der Lichtaustrittspunkt 36 liegen in diesem Fall auf einer Umfangsfläche der Umhüllung 92. Die Umhüllung 92 kann beispielsweise eine Klarglas-Umhüllung sein.

Optionaler Weise kann der Streukörperabschnitt 24 mit den Streuzentren 22 auch komplett in allen drei Raumrichtungen von der Umhüllung 92 umgeben sein. Beispielsweise können dazu Verschlussteile 94 als Untereinheiten der Umhüllung 92 auf die Stirnflächen einer zylinder- oder quaderförmigen Ummantelung des Streukörperabschnitts 24 aufgebracht werden (siehe Fig. 5b). Auf diese Weise ist innerhalb der Umhüllung 92 ein Hohlraum bildbar, welcher mit einem festen, flüssigen oder gasförmigen Medium, welches die Streuzentren 22 enthält, befüllt ist. (Die zylinderförmige Ausbildung der Umhüllung 92 in Fig. 5a ist lediglich beispielhaft zu interpretieren. Die Umhüllung 92 kann z.B. auch quaderförmig sein.)

Auch auf der Umhüllung 92 können die oben schon beschriebenen Grauglasfilter 62 und 64 ausgebildet sein. Des Weiteren kann mindestens eine Außenfläche der Umhüllung 92 zumindest teilweise antireflektionsbeschichtet, geschliffen und/oder poliert sein.

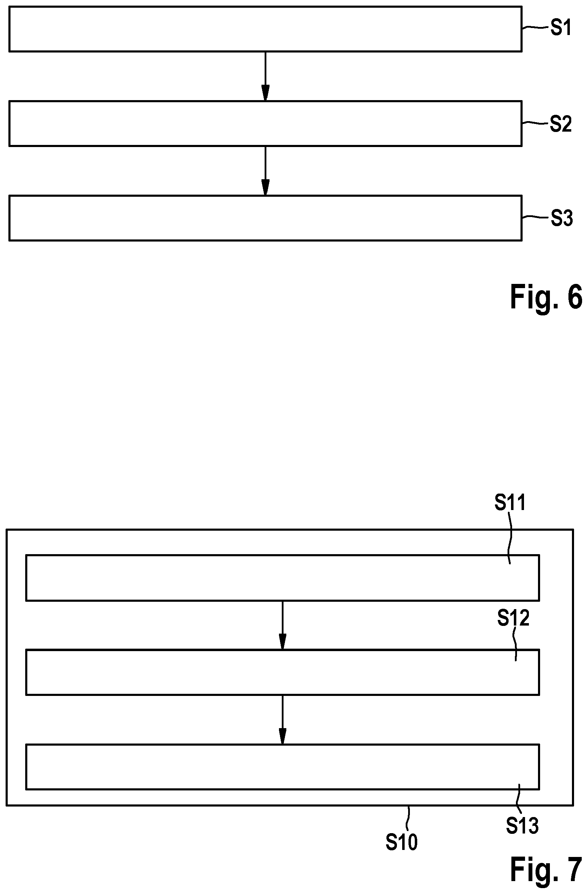

Fig. 6 zeigt ein Flussdiagramm zum Erläutern einer Ausführungsform des Verfahrens zum Überprüfen eines Streulichtmessgeräts.

Das im Weiteren beschriebene Verfahren kann zum Überprüfen, Eichen und/oder Kalibrieren eines Streulichtmessgeräts eingesetzt werden. Mittels des hier beschriebenen Verfahrens kann beispielsweise das oben erläuterte Streulichtmessgerät überprüft, kalibriert und/oder geeicht werden. Es wird jedoch darauf hingewiesen, dass eine Vielzahl verschiedener Streulichtmessgeräte mit diesem Verfahren ebenfalls überprüfbar und/oder kalibrierbar ist.

In einem Verfahrensschritt S1 wird ein lichtdurchlässiger Körper, welcher mehrere Streuzentren umfasst, an welchen ein von einer Lichtquelle des Streulichtmessgeräts ausgestrahltes Licht streubar ist, in einer Messkammer des zu überprüfenden Streulichtmessgeräts angeordnet. Dabei wird der lichtdurchlässige Körper derart in der Messkammer angeordnet, dass ein vorgelagerter Bereich des lichtdurchlässigen Körpers, welcher frei von den (zum Überprüfen genutzten) Streuzentren ist, zu der Lichtquelle ausgerichtet wird. Ein nachgelagerter Bereich des lichtdurchlässigen Körpers, welcher ebenfalls frei von den Streuzentren ist, wird von der Lichtquelle weg gerichtet, während ein Streukörperabschnitt des lichtdurchlässigen Körpers mit den darin vorliegenden Streuzentren zwischen dem vorgelagerten Bereich und dem nachgelagerten Bereich angeordnet wird. Bezüglich der Messkammer und einer in dem Verfahrensschritt S1 möglicherweise nutzbaren Halterung zum Positionieren des lichtdurchlässigen Körpers in der Messkammer wird auf die oberen Ausführungen verwiesen.

In einem Verfahrensschritt S2 wird die Lichtquelle derart aktiviert, dass Licht der Lichtquelle in die Messkammer ausgestrahlt und von den in dem Streukörperabschnitt vorliegenden Streuzentren gestreut wird. Beispielsweise tritt das Licht der Lichtquelle an einer Lichteintrittsseite in den lichtdurchlässigen Körper ein, transferiert zuerst durch den vorgelagerten Bereich, anschließend durch den Streukörperabschnitt und danach durch den nachgelagerten Bereich, bevor es an einer Lichtaustrittsseite aus dem lichtdurchlässigen Körper austritt. Wahlweise können auch mindestens eine dämpfende Beschichtung oder ein Grauglasfilter an dem lichtdurchlässigen Körper ausgebildet sein.

In einem Verfahrensschritt S3 werden eine Intensität und/oder eine Spektralverteilung des gestreuten und auf mindestens eine Detektionsfläche eines Lichtsensors des Streulichtmessgeräts auftreffenden Lichts mittels des mindestens einen Lichtsensors gemessen. Anhand mindestens eines von dem mindestens einen Lichtsensor gemessenen Werts kann überprüft werden, ob die Reaktion des Streulichtmessgeräts einer Vorgabe, für welche der lichtdurchlässige Körper ausgelegt ist, entspricht. Wahlweise kann auch eine Kalibrierung und/oder eine Eichung ausgeführt werden.

Die Verfahrensschritte S1 bis S3 können mehrmals wiederholt werden. Dabei können lichtdurchlässige Körper eingesetzt werden, welche für verschiedene Abgastrübungswerte, beispielsweise von 2 %, 20 %, 50 % und/oder 70 %, ausgebildet sind.

Fig. 7 zeigt ein Flussdiagramm zum Darstellen einer Ausführungsform des Herstellungsverfahrens zum Herstellen einer Prüfvorrichtung für ein Streulichtmessgerät.

Mittels des im Weiteren beschriebenen Herstellungsverfahrens kann jede der oben beschriebenen Prüfvorrichtung hergestellt werden. Andere Typen der Prüfvorrichtung sind jedoch auch mittels des Herstellungsverfahrens herstellbar.

In einem Verfahrensschritt S10 wird ein lichtdurchlässiger Körper der Prüfvorrichtung derart gebildet, dass der lichtdurchlässige Körper später in einer Messkammer des (zu überprüfenden) Streulichtmessgeräts anordbar ist. Der lichtdurchlässige Körper wird mit mehreren Streuzentren ausgebildet, mittels welchen ein von einer Lichtquelle des Streulichtmessgeräts ausgestrahltes Licht streubar ist.

Der Verfahrensschritt S10 umfasst die Teilschritte S11 bis S13: In einem Teilschritt S11 wird ein Streukörperabschnitt des lichtdurchlässigen Körpers mit den Streuzentren gebildet. In einem Teilschritt S12 wird ein vorgelagerter Bereich des lichtdurchlässigen Körpers, welcher frei von den Streuzentren ausgebildet wird, an dem Streukörperabschnitt angeordnet. Außerdem wird in einem Teilschritt S13 ein nachgelagerter Bereich des lichtdurchlässigen Körpers, welcher ebenfalls frei von den Streuzentren ausgebildet wird, an dem Streukörperabschnitt angeordnet. Die Teilschritte S12 und S13 werden so ausgeführt, dass der Streukörperabschnitt zwischen dem vorgelagerten Bereich und dem nachgelagerten Bereich angeordnet wird. Optionaler Weise kann der lichtdurchlässige Körper noch mit mindestens einem Grauglasfilter, einer dämpfenden Beschichtung, einer

Antireflektionsbeschichtung, mindestens einer geschliffenen Oberfläche und/oder mindestens einer polierten Oberfläche ausgebildet werden.

Die Teilschritte S11 bis S13 können gleichzeitig oder in einer beliebigen Reihenfolge ausgebildet werden.

Der Streukörperabschnitt kann mit einer vergleichsweise kleinen Dicke gefertigt werden, indem der Streukörperabschnitt zuerst auf einen der beiden Bereiche zu einem stabilen Verbund fixiert wird. Anschließend kann der Streukörperabschnitt solange bearbeitet werden, bis er in der gewünschten Dicke vorliegt. Danach kann der weitere Bereich an die zuvor bearbeitete Seite des Streukörperabschnitts fixiert werden. Somit ist während der Bearbeitung des Streukörperabschnitts gewährleistet, dass selbst bei einer vergleichsweise kleinen Dicke des Streukörperabschnitts der stabile Verbund eine ausreichende Stabilität aufweist, um ein Brechen des Streukörperabschnitts zu unterbinden.

## Patentansprüche

1. Prüfvorrichtung (10, 60, 70, 80, 90) für ein Streulichtmessgerät mit
einem lichtdurchlässigen Körper (20), welcher in einer Messkammer (16) des Streulichtmessgeräts anordbar ist und mehrere Streuzentren (22) umfasst, mittels welchen ein von einer Lichtquelle (12) des Streulichtmessgeräts ausgestrahltes Licht (14) streubar ist;
wobei, die Streuzentren (22) in einem Streukörperabschnitt (24) des lichtdurchlässigen Körpers (20) vorliegen, welcher zwischen einem lichtdurchlässigen vorgelagerten Bereich (26) des lichtdurchlässigen Körpers (20) und einem lichtdurchlässigen nachgelagerten Bereich (28) des lichtdurchlässigen Körpers (20) angeordnet ist, wobei der lichtdurchlässige vorgelagerte Bereich (26) und der lichtdurchlässige nachgelagerte Bereich (28) jeweils frei von den Streuzentren (22) sind, wobei der lichtdurchlässige vorgelagerte Bereich (26) des lichtdurchlässigen Körpers (20) und der lichtdurchlässige nachgelagerte Bereich (28) des lichtdurchlässigen Körpers (20) eine Umhüllung (92) bilden, welche den Streukörperabschnitt (24) mit den Streuzentren (22) zumindest in zwei von den drei Raumrichtungen komplett umhüllt,
wobei die Umhüllung (92) frei von den Streuzentren (22) ist.

2. Prüfvorrichtung (10, 60, 70, 80, 90) nach Anspruch 1, wobei der vorgelagerte Bereich (26) und/oder der nachgelagerte Bereich (28) aus Klarglas gebildet sind.

3. Prüfvorrichtung (10, 60, 70, 80, 90) nach Anspruch 1 oder 2, wobei der lichtdurchlässige Körper (20) einen ersten Grauglasfilter (62) und/oder eine erste dämpfende Beschichtung an zumindest einer Teilfläche zumindest einer Außenseite des Streukörperabschnitts (24) umfasst.

4. Prüfvorrichtung (10, 60, 70, 80, 90) nach einem der vorhergehenden Ansprüche, wobei der lichtdurchlässige Körper (20) einen zweiten Grauglasfilter (64) und/oder eine zweite dämpfende Beschichtung an einer von dem Streukörperabschnitt (24) weg gerichteten Seite des vorgelagerten Bereichs (26) umfasst.

5. Prüfvorrichtung (10, 60, 70, 80, 90) nach einem der vorhergehenden Ansprüche, wobei der lichtdurchlässige Körper (20) an einer Halterung (48) angeordnet ist, mittels welcher die Prüfvorrichtung (10, 60, 70, 80, 90) in der Messkammer (16) des Streulichtmessgeräts positionierbar ist.

6. Prüfvorrichtung (10, 60, 70, 80, 90) nach einem der vorhergehenden Ansprüche, wobei eine Lichteintrittsseite (30) und/oder eine Lichtaustrittsseite (32) des lichtdurchlässigen Körpers (20) antireflektionsbeschichtet, geschliffen und/oder poliert sind.

7. Prüfvorrichtung (10, 60, 70, 80, 90) nach einem der vorhergehenden Ansprüche, wobei mindestens eine seitliche Abstrahlfläche (50) des lichtdurchlässigen Körpers (20) antireflektionsbeschichtet, geschliffen und/oder poliert ist.

8. Prüfvorrichtung (10, 60, 70, 80, 90) nach einem der vorhergehenden Ansprüche, wobei der lichtdurchlässige Körper (20) quaderförmig ist.

9. Prüfvorrichtung (10, 60, 70, 80, 90) nach einem der Ansprüche 1 bis 7, wobei der lichtdurchlässige Körper (20) zylinderförmig ist.

10. Herstellungsverfahren zum Herstellen einer Prüfvorrichtung (10, 60, 70, 80, 90) eines Streulichtmessgeräts nach einem der Ansprüche 1 bis 9 mit den Schritten:
Bilden eines lichtdurchlässigen Körpers (20) der Prüfvorrichtung (10, 60, 70, 80, 90) derart, dass der lichtdurchlässige Körper (20) in einer Messkammer (16) des Streulichtmessgeräts anordbar ist, wobei der lichtdurchlässige Körper (20) mit mehreren Streuzentren (22) ausgebildet wird, mittels welchen ein von einer Lichtquelle (12) des Streulichtmessgeräts ausgestrahltes Licht (14) streubar ist (S10);
umfassend die folgenden Schritte zum Bilden des lichtdurchlässigen Körpers (20):
Bilden eines Streukörperabschnitts (24) des lichtdurchlässigen Körpers (20) mit den Streuzentren (22) (S11); und
Anordnen des Streukörperabschnitts (24) zwischen einem lichtdurchlässigen vorgelagerten Bereich (26) des lichtdurchlässigen Körpers (20) und einem lichtdurchlässigen nachgelagerten Bereich (28) des lichtdurchlässigen Körpers (20), wobei der lichtdurchlässige vorgelagerte Bereich (26) und der lichtdurchlässige nachgelagerte Bereich (28) jeweils frei von den Streuzentren (22) ausgebildet werden (S12, S13).

11. Verfahren zum Überprüfen eines Streulichtmessgeräts mit den Schritten:
Anordnen einer Prüfvorrichtung (10, 60, 70, 80, 90) mit einem lichtdurchlässigen Körper (20) nach einem der Ansprüche 1-9, welche mehrere Streuzentren (22) umfasst, an welchen ein von einer Lichtquelle (12) des Streulichtmessgeräts ausgestrahltes Licht (14) streubar ist, in einer Messkammer (16) des Streulichtmessgeräts (S1);
Aktivieren der Lichtquelle (12) derart, dass das Licht (14) der Lichtquelle (12) in die Messkammer (16) ausgestrahlt und von den Streuzentren (22) gestreut wird (S2); und
Messen einer Intensität und/oder einer Spektralverteilung des gestreuten und auf mindestens eine Detektionsfläche eines Lichtsensors (18) des Streulichtmessgeräts auftreffenden Lichts mittels des mindestens einen Lichtsensors (18) (S3);
wobei, der lichtdurchlässige Körper (20) derart in der Messkammer (16) angeordnet wird, dass ein lichtdurchlässiger vorgelagerter Bereich (26) des lichtdurchlässigen Körpers (20), welcher frei von den Streuzentren (22) ist, zu der Lichtquelle (12) ausgerichtet wird, während ein lichtdurchlässigen nachgelagerten Bereich (28) des lichtdurchlässigen Körpers (20), welcher frei von den Streuzentren (22) ist, von der Lichtquelle (12) weg gerichtet wird, wobei ein Streukörperabschnitt (24) des lichtdurchlässigen Körpers (20) mit den darin vorliegenden Streuzentren (22) zwischen dem lichtdurchlässigen vorgelagerten Bereich (26) und dem lichtdurchlässigen nachgelagerten Bereich (28) angeordnet wird (S1).

## Claims

1. Test apparatus (10, 60, 70, 80, 90) for a scattered-light measuring device having a light-transmissive body (20), which is arrangeable in a measurement chamber (16) of the scattered-light measuring device and comprises a plurality of scattering centres (22), by way of which light (14) emitted by a light source (12) of the scattered-light measuring device is scatterable; wherein the scattering centres (22) are present in a scattering body section (24) of the light-transmissive body (20), which is arranged between a light-transmissive upstream region (26) of the light-transmissive body (20) and a light-transmissive downstream region (28) of the light-transmissive body (20), wherein the light-transmissive upstream region (26) and the light-transmissive downstream region (28) are each free from the scattering centres (22), wherein the light-transmissive upstream region (26) of the light-transmissive body (20) and the light-transmissive downstream region (28) of the light-transmissive body (20) form a covering (92) which envelops the scattering body section (24) having the scattering centres (22) completely at least in two out of the three spatial directions, wherein the covering (92) is free from the scattering centres (22).

2. Test apparatus (10, 60, 70, 80, 90) according to Claim 1, wherein the upstream region (26) and/or the downstream region (28) are formed from clear glass.

3. Test apparatus (10, 60, 70, 80, 90) according to Claim 1 or 2, wherein the light-transmissive body (20) comprises a first grey glass filter (62) and/or a first attenuating coating on at least one partial surface of at least one external side of the scattering body section (24) .

4. Test apparatus (10, 60, 70, 80, 90) according to one of the preceding claims, wherein the light-transmissive body (20) comprises a second grey glass filter (64) and/or a second attenuating coating on a side of the upstream region (26) that faces away from the scattering body section (24).

5. Test apparatus (10, 60, 70, 80, 90) according to one of the preceding claims, wherein the light-transmissive body (20) is arranged on a holder (48), by means of which the test apparatus (10, 60, 70, 80, 90) is able to be positioned in the measurement chamber (16) of the scattered-light measuring device.

6. Test apparatus (10, 60, 70, 80, 90) according to one of the preceding claims, wherein a light entrance side (30) and/or a light exit side (32) of the light-transmissive body (20) are anti-reflectively coated, grinded and/or polished.

7. Test apparatus (10, 60, 70, 80, 90) according to one of the preceding claims, wherein at least one lateral emission surface (50) of the light-transmissive body (20) is anti-reflectively coated, grinded and/or polished.

8. Test apparatus (10, 60, 70, 80, 90) according to one of the preceding claims, wherein the light-transmissive body (20) is cuboid.

9. Test apparatus (10, 60, 70, 80, 90) according to one of Claims 1 to 7, wherein the light-transmissive body (20) is cylindrical.

10. Production method for producing a test apparatus (10, 60, 70, 80, 90) of a scattered-light measuring device according to one of Claims 1 to 9, having the steps of:
forming a light-transmissive body (20) of the test apparatus (10, 60, 70, 80, 90) such that the light-transmissive body (20) is arrangeable in a measurement chamber (16) of the scattered-light measuring device, wherein the light-transmissive body (20) is embodied to have a plurality of scattering centres (22), by means of which light (14) emitted by a light source (12) of the scattered-light measuring device is scatterable (S10); comprising the following steps for forming the light-transmissive body (20):
forming a scattering body section (24) of the light-transmissive body (20) having the scattering centres (22) (S11); and
arranging the scattering body section (24) between a light-transmissive upstream region (26) of the light-transmissive body (20) and a light-transmissive downstream region (28) of the light-transmissive body (20), wherein the light-transmissive upstream region (26) and the light-transmissive downstream region (28) are embodied to be each free from the scattering centres (22) (S12, S13).

11. Method for testing a scattered-light measuring device having the steps of:
arranging a test apparatus (10, 60, 70, 80, 90) having a light-transmissive body (20) according to one of Claims 1-9, which comprises a plurality of scattering centres (22), at which light (14) emitted by a light source (12) of the scattered-light measuring device is scatterable, in a measurement chamber (16) of the scattered-light measuring device (S1) ;
activating the light source (12) such that the light (14) from the light source (12) is emitted into the measurement chamber (16) and is scattered by the scattering centres (22) (S2); and
measuring an intensity and/or a spectral distribution of the scattered light which is incident on at least one detection surface of a light sensor (18) of the scattered-light measuring device using the at least one light sensor (18) (S3);
wherein the light-transmissive body (20) is arranged in the measurement chamber (16) such that a light-transmissive upstream region (26) of the light-transmissive body (20), which is free from the scattering centres (22), is oriented towards the light source (12), while a light-transmissive downstream region (28) of the light-transmissive body (20), which is free from the scattering centres (22), is oriented away from the light source (12), wherein a scattering body section (24) of the light-transmissive body (20) having the scattering centres (22) provided therein is arranged between the light-transmissive upstream region (26) and the light-transmissive downstream region (28) (S1).

## Revendications

1. Dispositif de contrôle (10, 60, 70, 80, 90) pour un appareil de mesure de lumière diffusée, comprenant un corps transparent (20) qui peut être disposé dans une chambre de mesure (16) de l'appareil de mesure de lumière diffusée et qui comporte plusieurs centres de diffusion (22) au moyen desquels une lumière (14) émise par une source de lumière (12) de l'appareil de mesure de lumière diffusée peut être diffusée ;
les centres de diffusion (22) se trouvant dans une portion de corps de diffusion (24) du corps transparent (20) qui est disposée entre une zone transparente amont (26) du corps transparent (20) et une zone transparente aval (28) du corps transparent (20), la zone transparente amont (26) et la zone transparente aval (28) étant respectivement dépourvues des centres de diffusion (22), la zone transparente amont (26) du corps transparent (20) et la zone transparente aval (28) du corps transparent (20) formant une enveloppe (92) qui enveloppe complètement la portion de corps de diffusion (24) pourvue des centres de diffusion (22) au moins dans deux des trois directions dans l'espace, l'enveloppe (92) étant dépourvue des centres de diffusion (22).

2. Dispositif de contrôle (10, 60, 70, 80, 90) selon la revendication 1, la zone amont (26) et/ou la zone aval (28) étant formées de verre clair.

3. Dispositif de contrôle (10, 60, 70, 80, 90) selon la revendication 1 ou 2, le corps transparent (20) comportant un premier filtre en verre gris (62) et/ou un premier revêtement tamisant au niveau d'au moins une surface partielle d'au moins un côté extérieur de la portion de corps de diffusion (24).

4. Dispositif de contrôle (10, 60, 70, 80, 90) selon l'une des revendications précédentes, le corps transparent (20) comportant un deuxième filtre en verre gris (64) et/ou un deuxième revêtement tamisant au niveau d'un côté de la zone amont (26) orienté à l'opposé de la portion de corps de diffusion (24).

5. Dispositif de contrôle (10, 60, 70, 80, 90) selon l'une des revendications précédentes, le corps transparent (20) étant disposé au niveau d'un support (48) au moyen duquel le dispositif de contrôle (10, 60, 70, 80, 90) peut être positionné dans la chambre de mesure (16) de l'appareil de mesure de lumière diffusée.

6. Dispositif de contrôle (10, 60, 70, 80, 90) selon l'une des revendications précédentes, un côté d'entrée de lumière (30) et/ou un côté de sortie de lumière (32) du corps transparent (20) étant pourvus d'un revêtement antiréfléchissant, poncés et/ou polis.

7. Dispositif de contrôle (10, 60, 70, 80, 90) selon l'une des revendications précédentes, au moins une surface rayonnante latérale (50) du corps transparent (20) étant pourvue d'un revêtement antiréfléchissant, poncée et/ou polie.

8. Dispositif de contrôle (10, 60, 70, 80, 90) selon l'une des revendications précédentes, le corps transparent (20) étant parallélépipédique.

9. Dispositif de contrôle (10, 60, 70, 80, 90) selon l'une des revendications 1 à 7, le corps transparent (20) étant cylindrique.

10. Procédé de fabrication d'un dispositif de contrôle (10, 60, 70, 80, 90) d'un appareil de mesure de lumière diffusée selon l'une des revendications 1 à 9, comprenant les étapes :
formation d'un corps transparent (20) du dispositif de contrôle (10, 60, 70, 80, 90) de telle sorte que le corps transparent (20) peut être disposé dans une chambre de mesure (16) de l'appareil de mesure de lumière diffusée, le corps transparent (20) étant configuré avec plusieurs centres de diffusion (22) au moyen desquels une lumière (14) émise par une source de lumière (12) de l'appareil de mesure de lumière diffusée peut être diffusée (S10) ; comprenant les étapes suivantes pour la formation du corps transparent (20) :
formation d'une portion de corps de diffusion (24) du corps transparent (20) comprenant les centres de diffusion (22) (S11) ; et
disposition de la portion de corps de diffusion (24) entre une zone transparente amont (26) du corps transparent (20) et une zone transparente aval (28) du corps transparent (20), la zone transparente amont (26) et la zone transparente aval (28) étant respectivement réalisées dépourvues des centres de diffusion (22) (S12, S13) .

11. Procédé de contrôle d'un appareil de mesure de lumière diffusée, comprenant les étapes :
disposition d'un dispositif de contrôle (10, 60, 70, 80, 90) comprenant un corps transparent (20) selon l'une des revendications 1 à 9, qui
comporte plusieurs centres de diffusion (22), au niveau desquels peut être diffusée une lumière (14) émise par une source de lumière de l'appareil de mesure de lumière diffusée, dans une chambre de mesure (16) de l'appareil de mesure de lumière diffusée (S1) ;
activation de la source de lumière (12) de telle sorte que la lumière (14) de la source de lumière (12) est émise dans la chambre de mesure (16) et diffusée par les centres de diffusion (22) (S2) ; et
mesure d'une intensité et/ou d'une distribution spectrale de la lumière diffusée et incidente sur au moins une surface de détection d'un capteur de lumière (18) de l'appareil de mesure de lumière diffusée au moyen de l'au moins un capteur de lumière (18) (S3) ;
le corps transparent (20) étant disposé dans la chambre de mesure (16) de telle sorte qu'une zone transparente amont (26) du corps transparent (20), laquelle est dépourvue des centres de diffusion (22), est orientée vers la source de lumière (12), alors qu'une zone transparente aval (28) du corps transparent (20), laquelle est dépourvue des centres de diffusion (22), est orientée à l'opposé de la source de lumière (12), une portion de corps de diffusion (24) du corps transparent (20) avec les centres de diffusion (22) qu'elle contient étant disposée entre la zone transparente amont (26) et la zone transparente aval (28) (S1).
